# FASCICULE DE BREVET EUROPEEN

(11) **EP 2 080 123 B1**
(45) Date de publication et mention de la délivrance du brevet: **15.06.2011**
(21) Numéro de dépôt: 07858614.6
(22) Date de dépôt: 17.10.2007
(51) Int. Cl.: G06F 17/30, H04L 29/06

(54) **PROCEDE DE RAFRAICHISSEMENT DE CONTENUS, CACHE, TERMINAL, SERVEURS ET PROGRAMMES D'ORDINATEUR ASSOCIES**
INHALTAKTUALISIERUNGSVERFAHREN SOWIE CACHE-SPEICHER, ENDGERÄT, SERVER UND COMPUTERSOFTWARE DAFÜR
CONTENT REFRESHING METHOD AND RELATED CACHE, TERMINAL, SERVERS AND COMPUTER SOFTWARE

(30) Priorité: 19.10.2006 FR 0609175
(43) Date de publication de la demande: 22.07.2009
(73) Titulaire: FRANCE TELECOM, 75015 Paris (FR)
(72) Inventeur: LEVESQUE, Thierry, 35131 Chartres De Bretagne (FR); ROY, David, 35370 Argentre Du Plessis (FR)
(74) Mandataire: Stephann, Valérie Annabelle
(86) Numéro de dépôt international: PCT/FR2007/052191
(87) Numéro de publication internationale: WO 2008/047053

(56) Documents cités:
- US-A- 6 157 930
- US-A1- 2002 007 404
- US-A1- 2004 068 579
- DINGLE A ET AL: "Web cache coherence" COMPUTER NETWORKS AND ISDN SYSTEMS, NORTH HOLLAND PUBLISHING. AMSTERDAM, NL, vol. 28, no. 11, mai 1996 (1996-05), pages 907-920, XP004018195 ISSN: 0169-7552

## Description

La présente invention concerne le domaine des réseaux de télécommunications mettant en oeuvre des techniques de rafraîchissement de contenus délivrés chacun en association avec une date d'expiration respective.

La présente invention concerne particulièrement de tels réseaux comprenant au moins un serveur de contenus S, des terminaux T1, T2, ... Tn associés à des caches locaux respectifs CL1, CL2, ...CLn et un cache réseau CR interposé entre le serveur S et les caches locaux CL1, CL2, ... CLn des terminaux T1, T2, ... Tn.

Dans un tel réseau, par exemple conforme au protocole de communication http (« Hypertext Transfer Protocol ») normalisé par l'IETF, le serveur S est un serveur gérant des contenus, leur affectant des dates d'expiration respectives et les actualisant régulièrement. A chaque actualisation d'un contenu (ayant lieu généralement à sa date d'expiration), une nouvelle date d'expiration, plus tardive, lui est affectée par le serveur S.

Les contenus peuvent être des données diverses, par exemple des pages html, un fichier, une image, un son, une application logicielle etc.

La date d'expiration associée à un contenu indique le moment à partir duquel les données figurant dans un contenu ne doivent plus être considérées comme fiables par les terminaux exploitant ces contenus.

Les caches sont des dispositifs (par exemple de type serveur proxy) qui comportent une mémoire adaptée pour stocker des contenus et pour les fournir lorsqu'il est à nouveau requis l'accès audit contenu. L'utilisation de caches permet d'accroître les performances du système, en évitant l'envoi de requêtes et/ou de réponse dans de nombreux cas.

Par exemple, soit un terminal T1 effectuant une requête à destination du serveur S pour le contenu C1. Cette requête transite par le cache local CL1 du terminal T1, qui vérifie que le contenu C1 souhaité ne se trouve pas dans sa mémoire. Si effectivement le contenu C1 est absent de sa mémoire (ou est présent avec un date d'expiration dépassée), la requête est transmise au cache réseau CR, qui vérifie à son tour que le contenu C1 souhaité ne se trouve pas dans sa mémoire M. Si effectivement le contenu C1 est absent de sa mémoire M (ou est présent avec un date d'expiration dépassée), le cache réseau CR relaie la requête auprès du serveur S. Ce dernier transmet alors le contenu C1 associé à une date d'expiration D1 au cache réseau CR. Le cache réseau CR stocke dans sa mémoire M le contenu C1 associé à sa date d'expiration D1. Puis le cache réseau CR relaie le contenu C1 associé à sa date d'expiration D1 à destination du terminal T1. Le contenu C1 et sa date d'expiration D1 sont stockés dans la mémoire du cache local CL1 du terminal T1.

Si le terminal T2 à son tour effectue une requête à destination du serveur S pour le contenu C1, cette requête du terminal T2 par le cache local CL2 du terminal T2, qui vérifie que le contenu C1 souhaité ne se trouve pas dans sa mémoire. Si effectivement le contenu C1 est absent de sa mémoire (ou est présent avec un date d'expiration dépassée), la requête est transmise au cache réseau CR, qui vérifie à son tour que le contenu C1 souhaité ne se trouve pas dans sa mémoire M. Si la date de réception de la requête du terminal T2 est inférieure à la date d'expiration D1 associée au contenu C1 et mémorisée dans la mémoire M, le cache réseau CR ne relaie pas la requête auprès du serveur S, mais transmet au terminal T2 une copie du contenu C1 associé à sa date d'expiration D1 tel que stocké dans la mémoire M. Le contenu C1 et sa date d'expiration D1 sont alors stockés dans la mémoire du cache local CL2 du terminal T2.

L'utilisation du cache réseau permet donc de moins solliciter le serveur lorsque plusieurs terminaux effectuent la même requête, et de diminuer la charge du réseau tout en accélérant le traitement des requêtes.

Si l'utilisateur du terminal T2 requiert ultérieurement à nouveau l'accès au contenu C1, le cache CL2 du terminal T2 vérifie d'abord si le contenu C1 est présent dans sa mémoire et compare la date de cette requête avec la date d'expiration D1 qui lui est associée. Si la date de la requête est inférieure à la date d'expiration D1, le cache CL2 transmet une copie du contenu C1 tel que mémorisé dans sa mémoire au terminal T2. Sinon, le cache CL2 effectue une demande de rafraîchissement du contenu C1 auprès du cache réseau CR. Lorsque le cache réseau CR reçoit cette requête, si la date d'expiration du contenu C1 alors dans sa mémoire M est antérieure à la requête du terminal T2, il relaie la requête de rafraîchissement du contenu C1 vers le serveur S, qui transmet alors le contenu C1 mis à jour et associé à une date d'expiration D2 au cache réseau CR. Le cache réseau CR stocke dans sa mémoire M le contenu C1 associé à sa nouvelle date d'expiration D2. Puis le cache réseau CR relaie le contenu C1 associé à sa date d'expiration D2 à destination du terminal T2. Le contenu C1 et sa date d'expiration D2 sont alors stockés dans la mémoire du cache local CL2 du terminal T2. L'utilisation d'un cache local au terminal permet là encore de diminuer la charge du réseau et d'obtenir plus vite la réponse aux requêtes issues du terminal.

Dans certains cas, une demande de rafraîchissement d'un contenu n'est émise par un terminal que lorsque l'utilisateur du terminal requiert l'accès au contenu. Les requêtes de rafraîchissement pour un même contenu en provenance des utilisateurs sont alors généralement naturellement réparties dans le temps.

Cependant un nombre croissant d'applications exécutables dans les caches effectuent de façon systématique des demandes de rafraîchissement relatives à un contenu stocké dans la mémoire du cache, et ce à la date d'expiration associée au contenu. Le cache réseau est alors confronté à une multitude de requêtes similaires reçues au même moment, qui peuvent l'amener à solliciter plusieurs fois le serveur au sujet du même contenu. Il est ainsi rencontré des surcharges réseau et serveur à ces dates d'expiration associées aux contenus.

II existe donc un besoin pour diminuer la charge du réseau, des caches et serveurs au moment des dates d'expiration associées à des contenus, due notamment aux requêtes systématiques de rafraîchissement desdits contenus.

Le document US 2006/0136669 décrit un procédé pour calculer la périodicité minimale P de rafraîchissement (dit « time-box ») d'un cache suivant des critères internes au cache, par exemple le dimensionnement du cache, le nombre de contenus à rafraîchir dans le cache et le temps nécessaire pour chaque rafraîchissement, ainsi qu'une méthode pour qu'un cache apprenne dynamiquement la périodicité minimale de rafraîchissement.

Ce document ne permet pas de répondre au problème indiqué ci-dessus puisqu'il ne prend pas en considération de date d'expiration propre à chaque contenu soit indiquée par le serveur lors de la transmission du contenu. En effet, ce document part simplement du principe que l'ensemble des contenus présents dans le cache doit être renouvelé à chaque période P.

Le document US 2004/0068579 décrit, dans un système comportant un premier cache, associé à un serveur de contenus, et au moins un second cache client, associé à un terminal, un procédé pour le rafraîchissement de contenus, comprenant les étapes suivantes :
- stocker, par le premier cache associé au serveur et par le second cache associé au terminal, un contenu (CONT) et une date d'expiration associée audit contenu et indiquée par le serveur lors de la transmission du contenu;
- émettre par le second cache associé au terminal, à un instant déterminé, une requête de rafraîchissement du contenu vers le premier cache;
- émettre par le premier cache associé au serveur une requête de rafraîchissement du contenu à un instant déterminé vers le serveur.

La présente invention vise à améliorer le procédé défini ci-dessus. A cet effet, le système comprenant une pluralité de seconds caches associés à des terminaux, le procédé comprend en outre les étapes suivantes :
- stocker, par le premier cache associé au serveur et par les seconds caches associés aux terminaux, une fenêtre temporelle débutant à Exp - Δa et expirant à Exp + Δb, Δa et Δb étant des valeurs déterminées, et au moins une valeur parmi Δa et Δb étant non nulle;
- déterminer par les seconds caches associés aux terminaux des instants donnés dans ladite fenêtre temporelle pour émettre des requêtes de rafraîchissement, de manière à ce que les instants respectivement déterminés par certains au moins des seconds caches associés audits terminaux soient distincts les uns des autres dans ladite fenêtre temporelle ;
- émettre par le premier cache au serveur la requête de rafraîchissement soit à l'instant Exp - Δa, soit à la première requête reçue en provenance d'un second cache associé à un terminal dans la plage [Exp - Δa ; Exp].

Un tel procédé permet d'étaler les requêtes de rafraîchissement en provenance des terminaux sur une fenêtre temporelle déterminée et ainsi de limiter les surcharges réseau et serveur au moment de la date d'expiration, tout en assurant la fourniture du contenu réactualisé aux terminaux. Les instants auxquels les terminaux requièrent le rafraîchissement sont pilotés de manière à garantir un étalement des requêtes de rafraîchissement dans la fenêtre temporelle en vue d'éviter des pics de charge du réseau et du cache réseau.

La notion de date d'expiration, telle que fournie par le serveur et correspondant au fonctionnement actuel, est conservée sur la période [Exp - Δa, Exp] au cours de laquelle le terminal conserve la contrainte qu'un contenu ne peut être utilisé au-delà de la date Exp. La mise en oeuvre de l'invention dans un réseau permet que le réseau puisse être utilisé par des terminaux déjà déployés qui n'intègrent pas l'invention : la période [Exp- Δa, Exp- Δb] peut être ignorée des caches des terminaux qui n'implémentent pas l'invention : ils considèreront qu'ils doivent rafraîchir leurs données à Exp.

Dans un mode de réalisation, au moins l'une des valeurs Δa et Δb est délivrée par le serveur. Cette disposition a pour effet de permettre de piloter le rafraîchissement en fonction de contraintes liées au réseau et inconnues des terminaux et d'adapter la taille de la fenêtre temporelle pour étaler plus ou moins les requêtes de rafraîchissement en fonction de ces contraintes.

Optionnellement, Δa est strictement supérieur à 0. Dans un tel cas, la plupart des modifications nécessaires à la mise en oeuvre de l'invention sont à implémenter côté réseau.

Dans un mode de réalisation, la requête de rafraîchissement dudit contenu est émise par le premier cache auprès du serveur à l'instant Exp - Δa. Cette disposition permet d'accroître la rapidité de traitement des requêtes de rafraîchissement.

Dans un mode de réalisation, le serveur, lorsqu'il reçoit, en provenance du premier cache, une requête relative audit contenu entre les instants Exp - Δa et Exp, affecte au contenu une nouvelle date d'expiration postérieure à la date d'expiration Exp + Δb et transmet le contenu avec la nouvelle date d'expiration ainsi affectée. Cette disposition consistant à anticiper la mise à jour permet que le premier cache fournisse un contenu mis à jour dès la date d'expiration du contenu.

Dans un mode de réalisation, la requête de rafraîchissement du premier cache est déclenchée par la première réception, dans la fenêtre temporelle, d'une requête d'un second cache. Cette disposition permet de ne procéder au rafraîchissement du contenu par le premier cache que s'il existe une demande de rafraîchissement correspondante en provenance d'un terminal, et évite donc des rafraîchissements inutiles.

Dans un mode de réalisation, l'instant dans la fenêtre temporelle auquel un second cache requiert le rafraîchissement d'un contenu est déterminé par un tirage d'aléa propre audit second cache ou au terminal qui lui est associé. Cette disposition permet de lisser le nombre de requêtes de rafraîchissement des terminaux sur la longueur de la fenêtre temporelle de rafraîchissement.

Suivant un second aspect, l'invention propose un cache, destiné à la mise en oeuvre du procédé défini ci-dessus, associé à un serveur de contenus dont certains au moins sont associés à des dates d'expiration respectives indiquées par le serveur lors de la transmission du contenu, et adapté pour être relié au serveur de contenus et à au moins un terminal, ledit cache comprenant :
- des moyens de stockage d'un contenu et de la date d'expiration Exp associée audit contenu ;
- des moyens pour requérir auprès du serveur le rafraîchissement du contenu à un instant déterminé,
   caractérisé par le fait que
- les moyens de stockage sont agencés pour stocker, en association avec ledit contenu, une fenêtre temporelle débutant à Exp - Δa et expirant à Exp + Δb, Δa et Δb étant des valeurs déterminées, et Δa étant strictement supérieur à 0
- les moyens pour requérir auprès du serveur le rafraîchissement du contenu sont agencés pour émettre une requête de rafraîchissement soit à l'instant Exp - Δa, soit à la première requête reçue en provenance d'un second cache associé à un terminal dans la plage [Exp - Δa ; Exp].

Suivant un troisième aspect, l'invention propose un terminal, destiné à la mise en oeuvre du procédé précédemment défini, adapté pour être relié à un serveur de contenus dont certains au moins sont associés à des dates d'expiration respectives indiquées par le serveur lors de la transmission du contenu, ledit terminal comprenant :
- des moyens de stockage d'un contenu et d'une date d'expiration Exp associée audit contenu et
- des moyens pour émettre, à un instant déterminé, une requête de rafraîchissement du contenu vers un cache associé au serveur;
   caractérisé par le fait que,
- les moyens de stockage sont agencés pour stocker, en association avec ledit contenu, une fenêtre temporelle débutant à Exp - Δa et expirant à Exp + Δb, Δa et Δb étant des valeurs déterminées reçues en provenance du serveur, et Δa et/ou Δb étant non nul; et
- il est prévu des moyens pour déterminer dans ladite fenêtre temporelle l'instant pour émettre la requête de rafraîchissement du contenu, de manière à ce que ledit instant déterminé soit distinct d'autres instants respectivement déterminés par d'autres terminaux dans ladite fenêtre temporelle pour émettre des requêtes de rafraichissement.

Suivant un cinquième aspect, l'invention propose un programme d'ordinateur à installer dans un cache associé à un serveur de contenus dont certains au moins sont associés à des dates d'expiration respectives indiquées par le serveur lors de la transmission du contenu, et adapté pour être relié au serveur de contenus et à au moins un terminal, ledit programme comprenant des instructions pour mettre en oeuvre lors d'une exécution du programme par des moyens de traitement dudit cache, les étapes d'un procédé suivant le premier aspect de l'invention et qui incombent au premier cache associé au serveur.

Suivant un sixième aspect, l'invention propose un programme d'ordinateur à installer dans un terminal adapté pour être relié à un serveur de contenus dont certains au moins sont associés à des dates d'expiration respectives indiquées par le serveur lors de la transmission du contenu, ledit programme comprenant des instructions pour mettre en oeuvre lors d'une exécution du programme par des moyens de traitement dudit terminal, les étapes d'un procédé suivant le premier aspect de l'invention et qui incombent au second cache associé à un terminal.

D'autres caractéristiques et avantages de l'invention apparaîtront encore à la lecture de la description qui va suivre. Celle-ci est purement illustrative et doit être lue en regard des dessins annexés sur lesquels :
- la figure 1 est un réseau dans un mode de réalisation de l'invention ;
- la figure 2 est un chronogramme illustrant l'enchaînement des étapes d'un procédé de rafraîchissement dans un mode de réalisation de l'invention ;
- la figure 3 indique la version d'un contenu reçu par un terminal en fonction de la date de la requête de rafraîchissement du terminal dans le cas où Δa >0 et Δb=0.

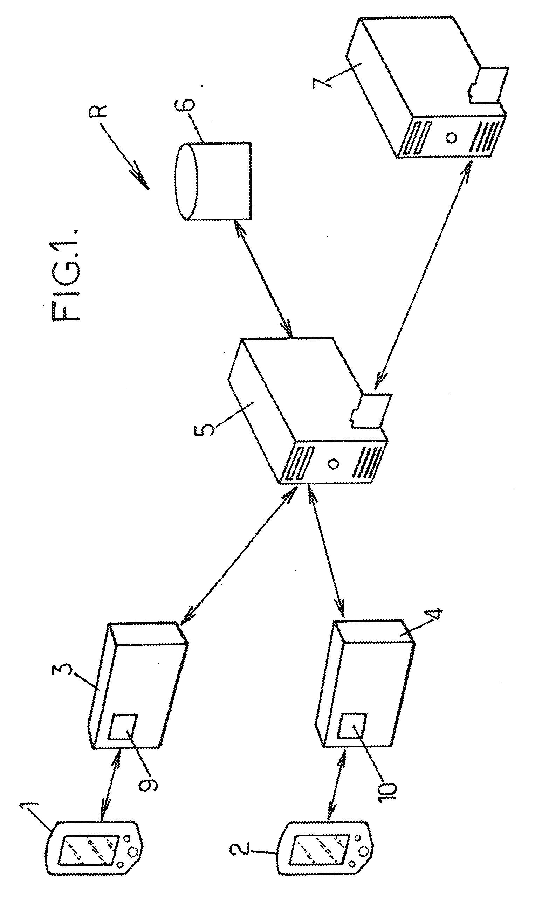

La figure 1 représente un réseau R interconnectant un serveur 7, un cache réseau 5 et une pluralité de terminaux associés à des caches locaux (parmi lesquels deux terminaux 1, 2 respectivement associés aux caches locaux 3, 4 sont représentés). Le cache réseau 5 comporte une mémoire 6 et est interposé entre les terminaux 1, 2 et le serveur 7.

Les caches des terminaux 1, 2 ou les terminaux sont adaptés pour systématiquement requérir le rafraîchissement des contenus présents dans les mémoires des caches locaux 3, 4. Les caches 3, 4 des terminaux 1, 2 comportent en outre un moteur d'aléas 9, 10 respectif.

Dans le mode de réalisation décrit, le réseau R est le réseau internet et les communications entre les entités du réseau sont conformes au protocole http.

Le serveur 7 est un serveur de contenus, par exemple un serveur de pages Web. Il est adapté pour réactualiser régulièrement chaque contenu, lui affecter, lors de cette réactualisation, une date d'expiration Exp et deux valeurs numériques Δa et Δb, positives ou nulles, également mises à jour. Ces valeurs Δa et Δb définissent une fenêtre temporelle [Exp - Δa ; Exp + Δb], contenant la date d'expiration du contenu.

Considérons que dans une étape préalable, les utilisateurs des terminaux `T1 et T2 aient tous deux requis pour la première fois le contenu CONT. Chacun des terminaux 1, 2 transmet la requête à son cache local respectif 3, 4 qui la fait suivre au cache réseau 5.

Le cache réseau 5 lorsqu'il reçoit la première de ces deux requêtes, par exemple la requête du terminal 1, détermine qu'il ne dispose pas du contenu CONT dans sa mémoire 6. Il relaye donc la requête au serveur 7 qui lui transmet en réponse un message comportant la version courante du contenu CONT et trois en-têtes « Date_Expiration », « Marge_avant » et « Marge_arrière » renseignés de la manière suivante : l'en-tête « Date_Expiration » indique une date d'expiration du contenu CONT de valeur Exp1, l'en-tête « Marge_avant » comporte la valeur Δa et l'en-tête « Marge_arrière » comporte la valeur Δb.

Lorsque le cache réseau 5 reçoit ce message, il mémorise dans sa mémoire 6 la version courante du contenu CONT et les valeurs Exp1, Δa et Δb fournies pour les trois en-têtes « Date_Expiration », « Marge_avant » et « Marge_arrière ». Puis il relaye le message au cache local 3 du terminal 1, qui à son tour mémorise dans sa mémoire la version courante du contenu CONT et les valeurs Exp1, Δa et Δb.

Puis, lorsque le cache réseau 5 reçoit la seconde des deux requêtes, envoyée par le terminal T2 avant (Exp1 - Δa), il détermine qu'il dispose du contenu CONT à jour dans sa mémoire 6. Il copie donc la version courante du contenu CONT et les valeurs Exp1, Δa et Δb stockées dans sa mémoire 6, puis envoie cette copie au cache local 4 du terminal 2, qui à son tour mémorise la version courante du contenu CONT et les valeurs Exp1, Δa et Δb.

Le serveur 7 est adapté pour que l'actualisation du contenu CONT ait lieu au plus tard à la date (Exp1 - Δa), de même que la mise à jour de la date d'expiration associée au contenu CONT qui devient alors Exp2 avec Exp2 > Exp1 + Δb.

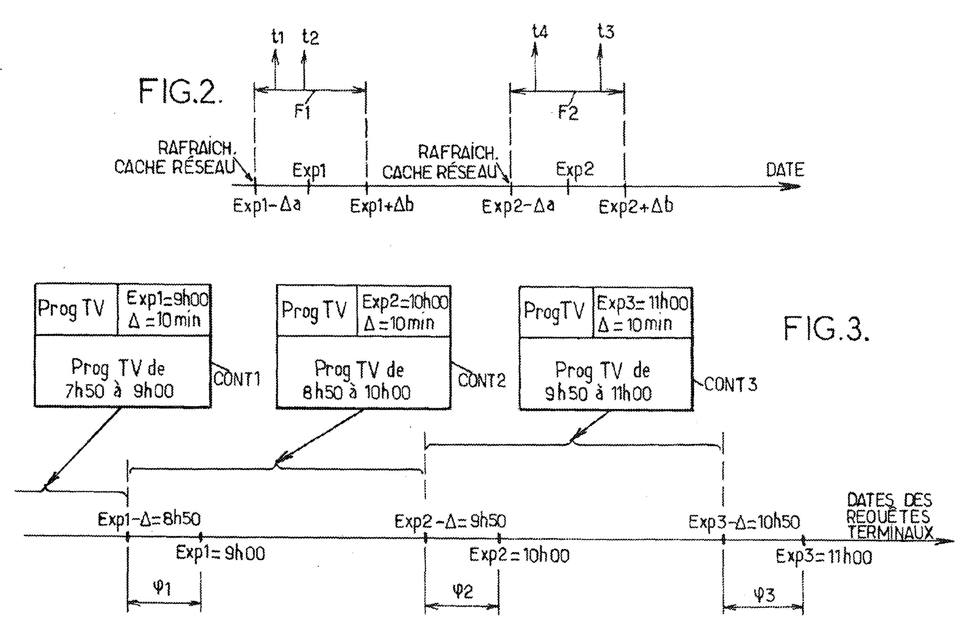

En référence à la figure 2, le cache réseau 5 lui est adapté pour automatiquement requérir le rafraîchissement du contenu CONT auprès du serveur 7 à la date (Exp1 - Δa).

En réponse à cette requête, le serveur 7 transmet au cache réseau 5 un message comportant la version actualisée du contenu CONT et trois en-têtes « Date_Expiration », « Marge_Avant » et « Marge_Arrière » renseignés de la manière suivante : l'en-tête « Date_Expiration » indique la date d'expiration de valeur Exp2, l'en-tête « Marge_Avant » comporte la valeur Δa et l'en-tête « Marge_Arrière » comporte la valeur Δb.

Lorsque le cache réseau 5 reçoit ce message, il mémorise dans sa mémoire 6 la le contenu CONT et les valeurs Exp2, Δa et Δb indiquées par ce message, à la place des anciennes données relatives au contenu CONT préalablement enregistrées dans la mémoire 6.

Par ailleurs, chaque cache 3, 4 de terminal 1, 2 est adapté pour déterminer, à l'aide de son moteur d'aléas 9, 10, de façon aléatoire un instant dans une fenêtre temporelle F1 associée au contenu CONT stocké dans la mémoire du cache 3, 4. Cette fenêtre temporelle F1 est ainsi définie : elle débute à la valeur correspondant à l'en-tête « Date_Expiration » (ici Exp1) alors stockée en mémoire du cache local pour le contenu CONT à laquelle on retranche la valeur alors stockée en mémoire du cache local pour l'en-tête « Marge_Avant » (ici Δa). La fenêtre temporelle F1 expire à la valeur correspondant à l'en-tête « Date-Expiration » (ici Exp1) alors stockée en mémoire du cache local pour le contenu CONT, à laquelle on ajoute la valeur alors stockée en mémoire du cache local pour l'en-tête « Marge_arrière » (ici Δb)

En référence à la figure 2, l'instant t1 est l'instant que le cache local 3 du terminal 1 a ainsi déterminé, et l'instant t2 est l'instant que le cache local 4 du terminal 2 a ainsi déterminé.

Le cache 3 du terminal T1 est adapté, pour à l'instant t1 ainsi déterminé dans la fenêtre temporelle F1, émettre une requête de rafraîchissement relative au contenu CONT alors stocké dans sa mémoire. Cette requête est reçue par le cache réseau 5, qui dispose en mémoire 6 de la version du contenu CONT, dont la date d'expiration Exp2 est supérieure à la date de réception de la requête de rafraîchissement en provenance du cache 3 (Exp2 > Exp1 + Δb).

Par conséquent, le cache réseau 5 copie donc la version courante du contenu CONT et des valeurs Exp2, Δa et Δb stockés dans sa mémoire 6, puis les envoie au cache local 3 du terminal 1, qui à son tour mémorise la version courante du contenu CONT et les valeurs associées Exp2, Δa et Δb pour les en-têtes respectifs « Date_Expiration », « Marge_Avant » et « Marge_Arrière », à la place de la version précédente du contenu CONT et des valeurs associées stockées jusqu'alors dans la mémoire du cache local 3.

De la même façon, le cache 4 du terminal T2 est adapté pour à l'instant t2 déterminé dans la fenêtre temporelle F1 de la façon décrite plus haut, émettre automatiquement une requête de rafraîchissement relative au contenu CONT alors stocké dans sa mémoire. Cette requête est reçue par le cache réseau 5, qui dispose en mémoire 6 d'une version du contenu CONT dont la date d'expiration Exp2 est supérieure à la date de réception de la requête de rafraîchissement en provenance du cache 3 (Exp2 > Exp1 + Δb).

Par conséquent, le cache réseau 5 copie la version du contenu CONT et des valeurs Exp2, Δa et Δb stockées dans sa mémoire 6, puis envoie ces copies au cache local 4 du terminal 2, qui à son tour mémorise cette version rafraîchie du contenu CONT et les valeurs rafraîchies associées Exp2, Δa et Δb pour les en-têtes respectifs « Date_Expiration », « Marge_Avant » et « Marge_Arrière », à la place de la version précédente du contenu CONT et des valeurs associées stockées jusqu'alors dans la mémoire du cache local 4.

En suite, le serveur 7 est adapté pour que l'actualisation du contenu CONT ait lieu au plus tard à la date (Exp2 - Δa), de même que la mise à jour de la date d'expiration associée au contenu CONT qui devient alors Exp3 avec Exp3 > Exp2.

Puis comme précédemment, le cache réseau 5 émet à l'instant Exp2 - Δa une requête de rafraîchissement du contenu CONT auprès du serveur 7, qui transmet en réponse un message comprenant une version actualisée du contenu CONT, et des valeurs Exp3, Δa Δb également mises à jour pour les en-têtes « Date_Expiration », « Marge_Avant » et « Marge_Arrière ».

Et les caches 3, 4 des terminaux 1, 2 définissent un nouvel instant respectivement t3, t4, au sein d'une fenêtre temporelle F2 = [Exp2 - Δa ; Exp2 + Δb], auquel émettre leur requête de rafraîchissement du contenu CONT.

Un tel réseau présente ainsi l'avantage d'étaler dans une fenêtre temporelle les demandes de rafraîchissement en provenance des caches locaux des terminaux, tout en garantissant que le cache réseau ait bien une version rafraîchie du contenu à transmettre dès la première requête de rafraîchissement en provenance d'un cache de terminal.

Les valeurs Δa et Δb sont par exemple définies en fonction de paramètres tels que l'estimation, pour la date d'expiration associée, de la charge du serveur 7, de la charge du réseau, du nombre de terminaux ayant requis le contenu CONT et/ou des performances du réseau. Elles sont par exemple calculées par le serveur 7.

Dans l'exemple ci-dessus, on a considéré que les valeurs des champs « Marge_avant » et « Marge_arrière » étaient constantes et égales respectivement à Δa et Δb. Bien sûr, ces valeurs peuvent être réactualisées elles-aussi, comme le contenu CONT, par le serveur, lors de l'opération de réactualisation. Et les valeurs réactualisées sont alors mémorisées dans les mémoires du cache réseau 5 et des caches locaux 3, 4 des terminaux 1, 2. Ces valeurs réactualisées sont alors prises en compte pour définir la future fenêtre de rafraîchissement des terminaux, la future date de rafraîchissement du cache réseau ainsi que la future date de renouvellement du contenu CONT et des en-têtes associés par le serveur 7.

Dans l'exemple décrit ci-dessus, le cache réseau 5 est adapté pour émettre une requête de rafraîchissement à destination du serveur un délai Δa avant l'instant correspondant à la date d'expiration courante. Dans un autre mode de réalisation, il est adapté pour émettre cette requête de rafraîchissement dès la première requête reçue en provenance d'un cache de terminal dans la plage [date d'expiration - Δa ; date d'expiration], et en tout état de cause au plus tard à la date d'expiration associée au contenu alors mémorisé dans sa mémoire 6.

Différents types de fenêtre temporelle peuvent être utilisés selon l'invention, en fonction des valeurs retenues pour Δa et Δb. Par exemple, certaines fenêtres temporelles peuvent débuter à la date d'expiration (Δa est alors égale à 0).

Dans un autre mode de réalisation, la fenêtre temporelle peut débuter avant la date d'expiration. On a alors Δa >0. L'avantage de cette disposition est que les principaux changements à apporter par rapport au fonctionnement de l'art antérieur sont au niveau du cache réseau et du serveur et non des terminaux, ce qui facilite la mise en oeuvre de l'invention. Lorsque Δa >0 et Δb=0, les terminaux continuent à appliquer la règle de l'art antérieur selon laquelle un document ne doit plus être utilisé au-delà de sa date d'expiration Exp. Ils doivent en outre appliquer la nouvelle règle correspondant à la possibilité d'envoyer une requête de rafraîchissement à partir de la date Exp-Δa et jusqu'à Exp.

Un tel cas particulier est représenté en figure 3. On a alors Δ= Δa >0 et Δb=0.

Les fenêtres temporelles successives de rafraîchissement des terminaux sont référencées ϕ1, ϕ2, ϕ3 etc.

Dans le mode de réalisation à présent considéré en référence à la figure 3, le contenu CONT est un programme quotidien de télévision. Nous allons considérer ci-dessous 3 étapes successives de rafraîchissement.

La première version du contenu CONT telle que gérée par le serveur 7 est le contenu référencé CONT1 sur la figure 3. Elle indique la programmation pour le jour courant de 7h50 à 9h00. Elle est associée à la date d'expiration Exp1 égale à 9h00 et à Δ égal à 10 minutes.

Le contenu CONT est actualisé par le serveur 7 au plus tard à la date Exp1- Δ, soit à 8h50. La seconde version du contenu CONT est le contenu référencé CONT2 sur la figure 3. Elle indique la programmation de 8h50 à 10h00. Elle est associée à la date d'expiration Exp2 égale à 10h00 et à Δ égal à 10 minutes.

Le contenu CONT est actualisé par le serveur 7 au plus tard à la date Exp2- Δ, soit 9h50. La seconde version du contenu CONT est le contenu référencé CONT3 sur la figure 3. Elle indique la programmation de 9h50 à 11h00. Elle est associée à la date d'expiration Exp3 égale à 10h00 et à Δ égal à 10 minutes.

Dans l'exemple considéré en référence à la figure 3, le cache réseau 5 est adapté pour effectuer automatiquement, 10 minutes (qui est la valeur de Δ) avant chaque date d'expiration Exp1, Exp2, Exp3 associée aux versions du contenu CONT successivement en mémoire 6, une demande de rafraîchissement auprès du serveur 7 relative au contenu CONT.

Chaque terminal mettant en oeuvre l'invention et associé à un cache local ayant en mémoire le programme CONT sous la forme CONT1, associé à la date d'expiration de valeur Exp1 (9h00) et à un champ Marge_Avant de valeur Δ=10 min est de façon similaire à celle décrite en référence à la figure 2 ci-dessus, adapté pour émettre à un instant déterminé de façon aléatoire au sein des fenêtres temporelles ϕ1, ϕ2, ϕ3, une requête de rafraîchissement du contenu CONT auprès du cache réseau 5.

Ainsi chaque terminal effectuant, via son cache local, une telle requête pendant la fenêtre temporelle ϕ1 = [8h50 ; 9h00] se verra retourner par le cache réseau 5 une copie du contenu CONT réactualisé correspondant à la version CONT2 associée à la date d'expiration de valeur Exp2 (10h00) et à un champ Marge_Avant de valeur Δ=10 min.

Le programme CONT sous sa forme réactualisée CONT2 sera également fourni à tout terminal ne disposant pas du contenu CONT dans son cache local et requérant l'accès au contenu CONT pendant la période [Exp1 - Δ ; Exp2 - Δ ]=[8h50 ; 9h50] et à chaque terminal n'implémentant pas l'invention, disposant du contenu CONT dans son cache local et effectuant de façon standard une demande de rafraîchissement relative au contenu CONT à la date d'expiration Exp1=9h00.

De même le programme CONT sous sa forme réactualisée CONT3 sera fourni à tous les terminaux implémentant l'invention pendant la fenêtre temporelle ϕ2 = [9h50 ; 10h00] suite à une demande de rafraîchissement du contenu CONT. Ce même contenu CONT3 sera par ailleurs fourni à chaque terminal ne disposant pas du contenu CONT dans son cache local et requérant l'accès au contenu CONT pendant la période [Exp2- Δ ; Exp3 - Δ ]=[9h50 ; 10h50] et à chaque terminal n'implémentant pas l'invention, disposant du contenu CONT dans son cache local et effectuant une demande de rafraîchissement relative au contenu CONT à la date d'expiration Exp2=10h00.

L'invention a été décrite ci-dessus en référence aux figures dans un environnement http. Dans un tel cas, l'information de date d'expiration d'un contenu est fournie par la valeur du champ dit « expires » ou celle du champ « MaxAge » (qui indique une durée et doit être associée à la date courante pour obtenir la date d'expiration).Toutefois, l'invention est applicable à tout environnement réseau gérant des mécanismes de rafraîchissement de cache, par exemple à un environnement mettant en oeuvre le protocole de transfert de fichiers ftp (« File Transfert Protocol »), et où l'information de gestion de cache serait fournie avec les données transférées.

Dans un mode de réalisation, certaines au moins des étapes d'un procédé selon l'invention sont mises en oeuvre suite à l'exécution par des moyens de traitement d'un terminal, d'un cache local du terminal, du cache réseau et/ou du serveur, d'instructions comprises dans un ou plusieurs programmes d'ordinateur.

La présente invention présente ainsi un mécanisme de rafraîchissement visant à réduire les surcharges réseau et serveur, lorsque les terminaux ou leurs caches locaux sont adaptés pour effectuer des requêtes de rafraîchissement automatiques en fonction de dates d'expiration des contenus spécifiées par le serveur. En effet, la présente invention permet d'étaler sur une fenêtre temporelle, dont la taille est imposée aux terminaux, leurs requêtes de rafraîchissement, et d'assurer que le cache réseau et le serveur soient aptes à fournir un contenu réactualisé en réponse à ces requêtes de rafraîchissement.

Selon l'invention, c'est une entité réseau (via le serveur) qui signale aux terminaux la période de rafraîchissement de leur cache local, tout en maintenant la notion de date d'expiration du contenu.

La mise en oeuvre de l'invention dans un réseau est compatible avec la poursuite de l'utilisation du réseau par un parc de terminaux n'implémentant pas eux l'invention. Si un mécanisme d'expiration est déjà connu de ces terminaux, un mode de mise de l'invention peut signaliser des valeurs Δa et Δb, qui sont ignorées des terminaux qui n'implémentent pas l'invention.

Ces dispositions permet, via les valeurs Δa et Δb, de piloter les requêtes de rafraîchissement des terminaux en fonction du nombre de terminaux, de la charge acceptable côté serveur et réseau, que les terminaux ignorent.

## Revendications

1. Procédé pour le rafraîchissement de contenus dans un système (R) comportant un premier cache (5) associé à un serveur (7) de contenus et relié à au moins un second cache (3, 4) associé à un terminal (1,2), comprenant les étapes suivantes :
- stocker, par le premier cache associé au serveur et par le second cache associé au terminal, un contenu, CONT, et une date d'expiration Exp associée audit contenu et indiquée par le serveur lors de la transmission du contenu, ;
- émettre par le second cache associé au terminal, à un instant déterminé, une requête de rafraîchissement du contenu vers le premier cache ;
- émettre par le premier cache associé au serveur une requête de rafraîchissement du contenu, à un instant déterminé, vers le serveur (7);
**caractérisé par le fait que**, le système comprenant une pluralité de seconds caches associés à des terminaux, le procédé comprend les étapes suivantes :
- stocker, par le premier cache associé au serveur et par les seconds caches associés aux terminaux, une fenêtre temporelle débutant à Exp - Δa et expirant à Exp + Δb, Δa et Δb étant des valeurs déterminées, et au moins une valeur parmi Δa et Δb étant non nulle;
- déterminer par les seconds caches associés aux terminaux des instants donnés dans ladite fenêtre temporelle (t1) pour émettre des requêtes de rafraîchissement, de manière à ce que les instants respectivement déterminés par certains au moins des seconds caches associés audits terminaux soient distincts les uns des autres (t1, t2) dans ladite fenêtre temporelle ;
- émettre par le premier cache au serveur la requête de rafraîchissement soit à l'instant Exp - Δa, soit à la première requête reçue en provenance d'un second cache associé à un terminal dans la plage [Exp - Δa ; Exp].

2. Procédé selon la revendication 1, selon lequel au moins l'une des valeurs Δa et Δb est délivrée par le serveur (7).

3. Procédé selon l'une des revendications précédentes, selon lequel Δa est strictement supérieur à 0.

4. Procédé selon la revendication 3, selon lequel la requête de rafraîchissement dudit contenu est émise par le premier cache (5) auprès du serveur (7) à l'instant Exp - Δa.

5. Procédé selon la revendication 3 ou la revendication 4, selon lequel le serveur (7), lorsqu'il reçoit, en provenance du premier cache (5), une requête relative audit contenu, CONT, entre les instants Exp - Δa et Exp, affecte au contenu une nouvelle date d'expiration (Exp2) postérieure à la date d'expiration Exp + Δb et transmet ledit contenu avec ladite nouvelle date d'expiration ainsi affectée.

6. Procédé selon l'une des revendications précédentes, selon lequel la requête de rafraîchissement du premier cache est déclenchée par la première réception, dans la fenêtre temporelle, d'une requête d'un second cache.

7. Procédé selon l'une des revendications précédentes, selon lequel l'instant déterminé (t1) dans la fenêtre temporelle (F1) auquel un second cache (3) requiert le rafraîchissement d'un contenu est déterminé par un tirage d'aléa propre audit second cache (3) ou au terminal (1) qui lui est associé.

8. Cache (5), destiné à la mise en oeuvre du procédé selon la revendication 1, associé à un serveur (7) de contenus dont certains au moins sont associés à des dates d'expiration respectives indiquées par le serveur lors de la transmission du contenu, et adapté pour être relié au serveur de contenus et à au moins un terminal, ledit cache comprenant :
- des moyens de stockage (6) d'un contenu et de la date d'expiration Exp associée audit contenu ;
- des moyens pour requérir auprès du serveur (7) le rafraîchissement du contenu à un instant déterminé,
**caractérisé par le fait que**
- les moyens de stockage (6) sont agencés pour stocker, en association avec ledit contenu, une fenêtre temporelle débutant à Exp - Δa et expirant à Exp + Δb, Δa et Δb étant des valeurs déterminées, et Δa étant strictement supérieur à 0
- les moyens pour requérir auprès du serveur le rafraîchissement du contenu sont agencés pour émettre une requête de rafraîchissement soit à l'instant Exp - Δa, soit à la première requête reçue en provenance d'un second cache associé à un terminal dans la plage [Exp - Δa ; Exp].

9. Terminal (1,3), destiné à la mise en oeuvre du procédé de la revendication 1, adapté pour être relié à un serveur (7) de contenus dont certains au moins sont associés à des dates d'expiration respectives indiquées par le serveur lors de la transmission du contenu, ledit terminal comprenant :
- des moyens de stockage d'un contenu et d'une date d'expiration Exp associée audit contenu et
- des moyens pour émettre, à un instant déterminé, une requête de rafraîchissement du contenu vers un cache associé au serveur ;
**caractérisé par le fait que**,
- les moyens de stockage sont agencés pour stocker, en association avec ledit contenu, une fenêtre temporelle (F1) débutant à Exp - Δa et expirant à Exp + Δb, Δa et Δb étant des valeurs déterminées reçues en provenance du serveur, et Δa et/ou Δb étant non nul; et
- il est prévu des moyens pour déterminer dans ladite fenêtre temporelle l'instant (t1) pour émettre la requête de rafraîchissement du contenu, de manière à ce que ledit instant déterminé (t1) soit distinct d'autres instants respectivement déterminés par d'autres terminaux dans ladite fenêtre temporelle pour émettre des requêtes de rafraichissement..

10. Terminal selon la revendication 9, dans lequel les moyens pour déterminer l'instant donné (t1) pour émettre la requête de rafraîchissement, sont agencés pour déterminer ledit instant de façon aléatoire dans la fenêtre temporelle.

11. Programme d'ordinateur à installer dans un cache (5) associé à un serveur (7) de contenus dont certains au moins sont associés à des dates d'expiration respectives indiquées par le serveur lors de la transmission du contenu, et adapté pour être relié au serveur de contenus et à au moins un terminal, ledit programme comprenant des instructions pour mettre en oeuvre lors d'une exécution du programme par des moyens de traitement dudit cache, les étapes d'un procédé selon l'une des revendications 1 à 7 et incombant au premier cache, Δa étant strictement supérieur à 0.

12. Programme d'ordinateur à installer dans un terminal (1,3) adapté pour être relié à un serveur (7) de contenus dont certains au moins sont associés à des dates d'expiration respectives indiquées par le serveur lors de la transmission du contenu, ledit programme comprenant des instructions pour mettre en oeuvre lors d'une exécution du programme par des moyens de traitement dudit terminal, les étapes d'un procédé selon l'une des revendications 1 à 7 et incombant au second cache.

## Claims

1. Method for the refreshing of contents in a system (R) comprising a first cache (5) associated with a contents server (7) and linked to at least one second cache (3, 4) associated with a terminal (1, 2), comprising the following steps:
- storing, by the first cache associated with the server and by the second cache associated with the terminal, a content, CONT, and an expiry date Exp associated with said content and indicated by the server during the transmission of the content;
- sending by the second cache associated with the terminal, at a determined instant, a request to refresh the content to the first cache;
- sending by the first cache associated with the server a request to refresh the content, at a determined instant, to the server (7);
**characterized in that**, the system comprising a plurality of second caches associated with terminals, the method comprises the following steps:
- storing, by the first cache associated with the server and by the second caches associated with the terminals, a time window starting at Exp - Δa and expiring at Exp + Δb, Δa and Δb being determined values, and at least one value out of Δa and Δb being non-zero;
- determining, by the second caches associated with the terminals, given instants in said time window (F1) for sending refresh requests, so that the instants respectively determined by some at least of the second caches associated with said terminals are mutually distinct (t1, t2) in said time window;
- sending by the first cache to the server the request to refresh either at the instant Exp - Δa, or on the first request received from a second cache associated with a terminal in the span [Exp - Δa; Exp].

2. Method according to Claim 1, according to which at least one of the values Δa and Δb is delivered by the server (7).

3. Method according to one of the preceding claims, according to which Δa is strictly greater than 0.

4. Method according to Claim 3, according to which the request to refresh said content is sent by the first cache (5) to the server (7) at the instant Exp - Δa.

5. Method according to Claim 3 or Claim 4, according to which the server (7), when it receives, from the first cache (5), a request reflating to said content, CONT, between the instants Exp - Δa and Exp, assigns to the content a new expiry date (Exp2) subsequent to the expiry date Exp + Δb and transmits said content with said new expiry date thus assigned.

6. Method according to one of the preceding claims, according to which the refresh request of the first cache is triggered by the first reception, in the time window, of a request from a second cache.

7. Method according to one of the preceding claims, according to which the determined instant (t1) in the time window (F1) at which a second cache (3) requests the refreshing of a content is determined by a random draw specific to said second cache (3) or to the terminal (1) associated therewith.

8. Cache (5), intended for the implementation of the method according to Claim 1, associated with a contents server (7) at least some of the contents of which are associated with respective expiry dates indicated by the server during the transmission of the content, and adapted for being linked to the contents server and to at least one terminal, said cache comprising:
- means (6) for storing a content and the expiry date Exp associated with said content,
- means for requesting from the server (7) the refreshing of the content at a determined instant, **characterized in that**
- the storage means (6) are devised so as to store, in association with said content, a time window starting at Exp - Δa and expiring at Exp + Δb, Δa and Δb being determined values, and Δa being strictly greater than 0
- the means for requesting from the server the refreshing of the content are devised so as to send a request to refresh either at the instant Exp - Δa, or on the first request received from a second cache associated with a terminal in the span [Exp - Δa ; Exp].

9. Terminal (1, 3), intended for the implementation of the method according to Claim 1, adapted for being linked to a contents server (7) at least some of the contents of which are associated with respective expiry dates indicated by the server during the transmission of the content, said terminal comprising:
- means for storing a content and an expiry date Exp associated with said content and
- means for sending, at a determined instant, a request to refresh the content to a cache associated with the server;
**characterized in that**
- the storage means are devised so as to store, in association with said content, a time window (F1) starting at Exp - Δa and expiring at Exp + Δb, Δa and Δb being determined values received from the server, and Δa and/or Δb being non-zero; and
- means are provided for determining in said time window the instant (t1) for sending the request to refresh the content, so that said determined instant (t1) is distinct from other instants respectively determined by other terminal in said time window for sending refresh requests.

10. Terminal according to Claim 9, in which the means for determining the given instant (t1) for sending the refresh request are devised so as to determined said instant randomly in the time window.

11. Computer program to be installed in a cache (5) associated with a contents server (7) at least some of the contents of which are associated with respective expiry dates indicated by the server during the transmission of the content, and adapted for being linked to the contents server and to at least one terminal, said program comprising instructions for implementing during an execution of the program by processing means of said cache, the steps of a method according to one of Claims 1 to 7 and being incumbent on the first cache, Δa being strictly greater than 0.

12. Computer program to be installed in a terminal (1, 3) adapted for being linked to a contents server (7) at least some of the contents of which are associated with respective expiry dates indicated by the server during the transmission of the content, said program comprising instructions for implementing during an execution of the program by processing means of said terminal, the steps of a method according to one of Claims 1 to 7 and being incumbent on the second cache.

## Patentansprüche

1. Verfahren zum Auffrischen von Inhalten in einem System (R), das einen ersten Cache (5) aufweist, der einem Inhaltsserver (7) zugeordnet und mit mindestens einem zweiten Cache (3, 4) verbunden ist, der einem Endgerät (1, 2) zugeordnet ist, das die folgenden Schritte enthält:
- durch den dem Server zugeordneten ersten Cache und durch den dem Endgerät zugeordneten zweiten Cache einen Inhalt, CONT, und ein Ablaufdatum Exp zu speichern, das dem Inhalt zugeordnet ist und vom Server bei der Übertragung des Inhalts angegeben wird;
- durch den dem Endgerät zugeordneten zweiten Cache in einem gegebenen Zeitpunkt eine Anforderung zur Auffrischung des Inhalts an den ersten Cache zu senden;
- durch den dem Server zugeordneten ersten Cache eine Anforderung zur Auffrischung des Inhalts in einem gegebenen Zeitpunkt an den Server (7) zu senden;
**dadurch gekennzeichnet, dass**, da das System eine Vielzahl von Endgeräten zugeordneten zweiten Caches enthält, das Verfahren die folgenden Schritte enthält:
- durch den dem Server zugeordneten ersten Cache und durch die den Endgeräten zugeordneten zweiten Caches ein Zeitfenster zu speichern, das bei Exp - Δa beginnt und bei Exp +Δb endet, wobei Δa und Δb bestimmte Werte sind, und mindestens ein Wert unter Δa und Δb ungleich Null ist;
- durch die den Endgeräten zugeordneten zweiten Caches gegebene Zeitpunkte im Zeitfenster (F1) zu bestimmen, um Auffrischungsanforderungen zu senden, damit die Zeitpunkte (t1, t2), die je von zumindest bestimmten der den Endgeräten zugeordneten zweiten Caches bestimmt werden, sich im Zeitfenster voneinander unterscheiden;
- durch den ersten Cache die Auffrischungsanforderung an den Server entweder im Zeitpunkt Exp - Δa oder bei der ersten von einem einem Endgerät zugeordneten zweiten Cache im Bereich [Exp - Δa; Exp] empfangenen Anforderung zu senden.

2. Verfahren nach Anspruch 1, gemäß dem mindestens einer der Werte Δa und Δb vom Server (7) geliefert wird.

3. Verfahren nach einem der vorhergehenden Ansprüche, gemäß dem Δa strikt größer als 0 ist.

4. Verfahren nach Anspruch 3, gemäß dem die Anforderung zur Auffrischung des Inhalt von dem ersten Cache (5) im Zeitpunkt Exp - Δa an den Server (7) gesendet wird.

5. Verfahren nach Anspruch 3 oder Anspruch 4, gemäß dem der Server (7), wenn er vom ersten Cache (5) kommend eine Anforderung bezüglich des Inhalts, CONT, zwischen den Zeitpunkten Exp - Δa und Exp empfängt, dem Inhalt ein neues Ablaufdatum (Exp2) nach dem Ablaufdatum Exp + Δb zuweist und den Inhalt mit dem so zugewiesenen neuen Ablaufdatum überträgt.

6. Verfahren nach einem der vorhergehenden Ansprüche, gemäß dem die Auffrischungsanforderung des ersten Caches durch den ersten Empfang, im Zeitfenster, einer Anforderung eines zweiten Caches ausgelöst wird.

7. Verfahren nach einem der vorhergehenden Ansprüche, gemäß dem der bestimmte Zeitpunkt (t1) im Zeitfenster (F1), in dem ein zweiter Cache (3) die Auffrischung eines Inhalts anfordert, von einer Zufallsziehung bestimmt wird, die dem zweiten Cache (3) oder dem ihm zugeordneten Endgerät (1) eigen ist.

8. Cache (5), bestimmt zur Durchführung des Verfahrens nach Anspruch 1, der einem Server (7) von Inhalten zugeordnet ist, von denen zumindest bestimmte Ablaufdaten zugeordnet sind, die vom Server bei der Übertragung des Inhalts angegeben werden, und der geeignet ist, um mit dem Inhaltsserver und mit mindestens einem Endgerät verbunden zu werden, wobei der Cache enthält:
- Speichereinrichtungen (6) eines Inhalts und des dem Inhalt zugeordneten Ablaufdatums Exp;
- Einrichtungen, um beim Server (7) die Auffrischung des Inhalts zu einem bestimmten Zeitpunkt anzufordern,
**dadurch gekennzeichnet, dass**
- die Speichereinrichtungen (6) eingerichtet sind, um zusammen mit dem Inhalt ein Zeitfenster zu speichern, das bei Exp - Δa beginnt und bei Exp + Δb endet, wobei Δa und Δb bestimmte Werte sind, und Δa strikt größer als Null ist,
- die Einrichtungen zum Anfordern der Auffrischung des Inhalts beim Server eingerichtet sind, um eine Auffrischungsanforderung entweder im Zeitpunkt Exp - Δa oder bei der ersten Anforderung zu senden, die von einem einem Endgerät zugeordneten zweiten Cache kommend im Bereich [Exp - Δa; Exp] empfangen wird.

9. Endgerät (1, 3), das zur Durchführung des Verfahrens des Anspruchs 1 bestimmt ist, geeignet, um mit einem Server (7) von Inhalten verbunden zu werden, von denen mindestens bestimmte Ablaufdaten zugeordnet sind, die vom Server bei der Übertragung des Inhalts angegeben werden, wobei das Endgerät enthält:
- Einrichtungen zum Speichern eines Inhalts und eines dem Inhalt zugeordneten Ablaufdatums Exp, und
- Einrichtungen, um in einem gegebenen Zeitpunkt eine Anforderung zur Auffrischung des Inhalts an einen dem Server zugeordneten Cache zu senden;
**dadurch gekennzeichnet, dass**
- die Speichereinrichtungen eingerichtet sind, um in Verbindung mit dem Inhalt ein Zeitfenster (F1) zu speichern, das bei Exp - Δa beginnt und bei Exp + Δb endet, wobei Δa und Δb bestimmte Werte sind, die vom Server kommend empfangen werden, und Δa und/oder Δb ungleich Null sind; und
- Einrichtungen vorgesehen sind, um in dem Zeitfenster den Zeitpunkt (t1) zu bestimmen, um die Auffrischungsanforderung des Inhalts zu senden, damit der bestimmte Zeitpunkt (t1) sich von anderen Zeitpunkten unterscheidet, die von anderen Endgeräten in dem Zeitfenster bestimmt werden, um Auffrischungsanforderungen zu senden.

10. Endgerät nach Anspruch 9, bei dem die Einrichtungen zur Bestimmung des gegebenen Zeitpunkts (t1) zum Senden der Auffrischungsanforderung eingerichtet sind, um den Zeitpunkt zufällig im Zeitfenster zu bestimmen.

11. Computerprogramm, das in einem Cache (5) zu installieren ist, der einem Server (7) von Inhalten zugeordnet ist, von denen mindestens bestimmte Ablaufdaten zugeordnet sind, die vom Server bei der Übertragung des Inhalts angegeben werden, und der geeignet ist, um mit dem Inhaltsserver und mit mindestens einem Endgerät verbunden zu werden, wobei das Programm Anweisungen enthält, um bei einer Ausführung des Programms durch Verarbeitungseinrichtungen des Caches die Schritte eines Verfahrens nach einem der Ansprüche 1 bis 7 und dem ersten Cache obliegend durchzuführen, wobei Δa strikt größer als Null ist.

12. Computerprogramme, das in einem Endgerät (1, 3) zu installieren ist, das geeignet ist, um mit einem Server (7) von Inhalten verbunden zu werden, von denen mindestens bestimmte Ablaufdaten zugeordnet sind, die vom Server bei der Übertragung des Inhalts angegeben werden, wobei das Programm Anweisungen enthält, um bei einer Ausführung des Programms durch Verarbeitungseinrichtungen des Endgeräts die Schritte eines Verfahrens nach einem der Ansprüche 1 bis 7 und dem zweiten Cache obliegend durchzuführen.
